# FASCICULE DE BREVET EUROPEEN

(11) **EP 2 414 082 B1**
(45) Date de publication et mention de la délivrance du brevet: **17.12.2014**
(21) Numéro de dépôt: 10716380.0
(22) Date de dépôt: 11.03.2010
(51) Int. Cl.: B01D 69/14, B01D 71/52, B01D 53/22

(54) **MEMBRANE POLYMERE DYNAMIQUE AUTOSUPPORTEE, PROCEDE DE PREPARATION ET UTILISATIONS**
SELBSTTRAGENDE DYNAMISCHE POLYMER-MEMBRANEN, VERFAHREN ZU DEREN HERSTELLUNG UND DEREN VERWENDUNG
SELF-SUPPORTED DYNAMIC POLYMER MEMBRANES, PROCESS OF PREPARATION AND USE

(30) Priorité: 30.03.2009 FR 0901539
(43) Date de publication de la demande: 08.02.2012
(73) Titulaire: Centre National de la Recherche Scientifique, 75016 Paris (FR)
(72) Inventeur: NASR, Gihane, F-34000 Montpellier (FR); BARBOIU, Mihail-Dumitru, F-34080 Montpellier (FR); CHARMETTE, Christophe, F-34570 Murviel les Montpellier (FR); SANCHEZ MARCANO, José, Gregorio, F-34160 Sussargues (FR)
(74) Mandataire: Goulard, Sophie
(86) Numéro de dépôt international: PCT/FR2010/050422
(87) Numéro de publication internationale: WO 2010/112722

(56) Documents cités:
- US-A1- 2008 141 863
- US-B2- 7 339 008
- NASR G ET AL: "Dynamic polymer membranes displaying tunable transport properties on constitutional exchange", JOURNAL OF MEMBRANE SCIENCE, ELSEVIER SCIENTIFIC PUBL.COMPANY. AMSTERDAM, NL, vol. 321, no. 1, 1 August 2008 (2008-08-01), pages 8-14, XP022808130, ISSN: 0376-7388, DOI: 10.1016/J.MEMSCI.2008.03.005 [retrieved on 2008-03-13]

## Description

La présente invention est relative à des membranes polymères dynamiques (« membranes dynamères ») autosupportées de type polyimine intégrant des ions métalliques, à leur procédé de préparation et à leur utilisation dans des procédés de séparation, notamment d'espèces gazeuses.

Il existe différents types de procédés de séparation d'espèces chimiques tels que la cryogénie, la distillation, l'absorption par solvant (chimique ou physique), l'adsorption et la séparation membranaire.

Dans le domaine de la séparation des espèces gazeuses, en particulier du traitement des gaz naturels ou de synthèse, la séparation et la purification des composants sont indispensables pour répondre aux besoins croissants des utilisateurs. Ainsi, le gaz naturel brut et les composants dérivés doivent être débarrassés, entre autre, du dioxyde de carbone contenu par une opération dite de désacidification.

Parmi les différents procédés de séparation connus de l'art antérieur, la séparation membranaire est la moins consommatrice en énergie et figure parmi les procédés les plus utilisés au niveau industriel.

Parmi les procédés membranaires on distingue :
- les procédés utilisant des membranes inorganiques microporeuses essentiellement composées d'alumine, de silice, de zéolithes ou de carbone. Ces procédés sont efficaces, tolèrent des flux moyens ainsi que des températures et des pressions élevées mais ils sont onéreux. De plus les facteurs de sélectivité des membranes inorganiques vis-à-vis des espèces chimiques à séparer restent modestes.
- les procédés utilisant des membranes polymères sont moins coûteux en matière première et en énergie. Cependant les membranes utilisées se dégradent rapidement. L'élaboration de membranes organiques et leurs utilisations pour la séparation gazeuse ont été envisagées à partir de polymères de structures très variées. La majorité des procédés utilisés industriellement mettent en oeuvre des membranes fabriquées en polymères vitreux tels que par exemple les polyimides, les polysulfones et les polyphénylènes oxydes car elles possèdent généralement une plus grande sélectivité et de meilleures propriétés mécaniques mais en contrepartie elles acceptent un flux de séparation plus faible que les membranes inorganiques car elles ont une perméabilité insuffisante. D'autres polymères comme les élastomères tels que les polysiloxanes par exemple ont aussi été utilisés. Ils ont une perméabilité supérieure à celle des membranes fabriquées à partir de polymères vitreux mais ils sont moins sélectifs vis-à-vis des espèces gazeuses à séparer (A. Stern, J. of Membr. Sci., 1994, 94 ; S. T. Hwang et al., Separation Science, 1974, 9(6)). De manière générale, il a été constaté qu'il existe une relation inverse entre sélectivité et perméabilité : meilleure est la sélectivité, plus faible est la perméabilité. Ainsi, même si les procédés membranaires représentent une évolution par rapport aux procédés plus classiques, ils ont encore besoin d'être améliorés notamment parce que les membranes utilisées restent chères et qu'il est souvent nécessaire de faire un choix entre un flux important (perméabilité élevée) et une sélectivité élevée.

La sélectivité des membranes polymères utilisées vis-à-vis des espèces chimiques à séparer n'est par ailleurs pas modulable sauf si l'on agit sur la nature chimique et/ou la teneur des monomères les constituant. Il a ainsi déjà été proposé, notamment dans la demande de brevet EP 1 322 409 des membranes pour la séparation sélective de gaz, constituées par un copolymère d'oxyde d'éthylène (OE) et d'épichlorhydrine (EP), une partie des unités oxyde d'éthylène pouvant être remplacée par des unités oxyde de propylène (OP). Ces membranes sont en particulier utiles pour la séparation sélective du dioxyde de carbone (CO₂) contenu dans un mélange gazeux. La meilleure sélectivité au CO₂ est obtenue avec une membrane constituée d'unités OE/EP/OP en proportions 85/2/13 (% molaires). L'article de Sanchez J. et al. (Membrane Science, 2002, 205, 259-263) relate une étude de la perméabilité de films autosupportés obtenus à partir de copolymères de poly(oxyde d'éthylène) (POE) et d'épichlorhydrine réticulés. Il y est indiqué qu'il est possible de faire varier les propriétés de perméabilité au CO₂ en faisant varier le rapport POE/épichlorhydrine (POE/EP). Les meilleurs résultats sont obtenus avec les copolymères renfermant entre 87 et 96 % de motifs oxyde d'éthylène, la perméabilité maximale au CO₂ étant obtenue avec une teneur de 93 %.

Il existe donc un besoin pour des membranes polymères pouvant être fabriquées selon un procédé simple et peu coûteux et offrant à la fois une sélectivité élevée par rapport aux espèces que l'on souhaite séparer tout en conservant la possibilité de travailler avec des flux acceptables.

Il est également souhaitable de pouvoir disposer de membranes polymères dont la sélectivité peut être modulée de façon simple sans avoir à faire varier la nature chimique et/ou la teneur des monomères les constituant.

Le but de la présente invention est donc de pourvoir à des membranes polymères organiques ayant à la fois une sélectivité élevée par rapport aux espèces chimiques à séparer et pouvant être modulée facilement, tout en ayant une bonne perméabilité, lesdites membranes pouvant être préparées selon un procédé simple et peu couteux.

La présente invention a pour objet une membrane polymère auto-supportée, caractérisée en ce qu'elle est constituée par un polymère dynamique formé d'unités récurrentes de formule (I) suivante : 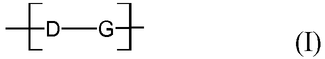 dans laquelle :
- **D** représente une sous-unité de formule (I_{D}) suivante : 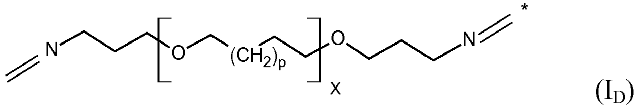 dans laquelle :
   ▪ x est un nombre entier qui varie de 10 à 20 ;
   ▪ p= 0 ou 1; et
   ▪ * est le point d'attachement de D à G par l'intermédiaire d'une liaison imine ;
- **G** représente une sous-unité de formule (I_{G}) suivante : 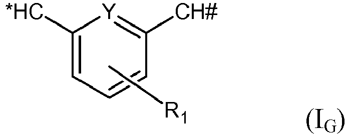 dans laquelle :
   ▪ R₁ représente un atome d'hydrogène ou un radical alkyle ayant de 1 à 4 atomes de carbone,
   ▪ Y représente un atome d'azote ou C-OH,
   ▪ # est le point d'attachement de G à D par l'intermédiaire d'une liaison imine ;
étant entendu qu'au moins 50 % en nombre desdites sous-unités de formule (I_{G}) présentes dans ledit polymère forment un complexe avec un ion métallique de transition.

Ces membranes ont de bonnes propriétés élastiques et une stabilité thermique élevée (environ 280°C). Elles présentent également une perméabilité améliorée au CO₂. De plus, les ions métalliques créent des points de réticulation pour la chaîne polymère et permet de moduler la sélectivité des membranes en fonction des espèces chimiques à séparer. Par ailleurs, les liaisons imine, qui sont par nature des liaisons réversibles, confèrent aux membranes des propriétés de réarrangement, d'auto-répartition et de sélectivité (d'où la qualification de « polymère dynamique »), ce qui favorise leur recyclage et donc la protection de l'environnement.

Selon l'invention, l'ion métallique de transition est de préférence choisi parmi Zn²⁺, Fe²⁺, Cu⁺, Ni²⁺, Co²⁺ et Ag⁺.

Parmi les radicaux alkyle mentionnés pour le radical R₁ de la sous-unité de formule (I_{G}), on peut citer les radicaux méthyle, éthyle, n-propyle, n-butyle et *t*-butyle. Selon une forme de réalisation préférée de l'invention, R₁ représente un radical *t*-butyle, et encore plus préférentiellement un radical *t*-butyle en position para par rapport à Y.

Selon une forme de réalisation préférée de l'invention, la sous-unité (I_{G}) est choisie parmi les sous-unités (I_{G1}) et (I_{G2}) suivantes :

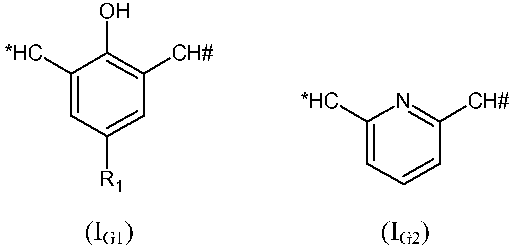

Dans la sous-unité de formule (I_{G1}) ci-dessus, le radical R₁ a les mêmes significations que celles indiquées ci-dessus pour la sous-unité de formule (I_{G}). Selon une forme de réalisation particulièrement préférée de l'invention, R₁ représente un radical *t*-butyle.

Les sous-unités de formules (I_{G}) présentent la particularité d'être capables de former des complexes avec les métaux de transition qui servent d'une part de point de réticulation du polymère de formule (I) et qui, d'autre part, se lient réversiblement aux espèces à séparer et facilitent leur passage à travers la membrane.

La sélectivité de la membrane vis-à-vis d'une espèce chimique donnée peut ainsi être modulée en faisant varier la nature du métal de transition utilisé (séparation des oléfines/paraffines avec Ag(I) ou Cu(I), séparation de N₂ par rapport à O₂ avec Co(II), etc...), séparation du CO₂ avec Zn(II) qui forme un site complexant pour le dioxyde de carbone.

Les membranes intégrant ce type de sous-unités présentent par ailleurs des propriétés de perméabilité et de solubilité améliorées vis-à-vis de certaines espèces gazeuses telles que le CO₂.

Selon une forme de réalisation préférée de l'invention, le pourcentage en nombre de sous-unités de formule (I_{G}) complexées à un ion métallique de transition varie de 50 à 200 %.

Les inventeurs ont en effet découvert que lorsque ce pourcentage est inférieur à 50, les membranes sont très perméables mais ne présentent pas une sélectivité suffisante et lorsque ce pourcentage est supérieur à 200, les membranes présentent une sélectivité très élevée mais, en contrepartie, une perméabilité insuffisante.

La membrane autosupportée conforme à la présente invention peut avoir une épaisseur variant de 300 à 600 µm environ et de préférence de 200 à 400 µm environ.

La présente invention a également pour objet un procédé de préparation d'une membrane polymère auto-supportée constituée par au moins un polymère dynamique formé d'unités récurrentes de formule (I) telle que définie ci-dessus, ledit procédé étant caractérisé en qu'il comprend les étapes suivantes :
a) la préparation d'un mélange réactionnel comprenant, en solution dans au moins un solvant organique :
   - au moins un précurseur d'une sous-unité D choisi parmi les précurseurs de formule (I'_{D}) suivante : 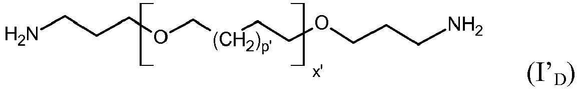 dans laquelle x' est un nombre entier qui varie de 10 à 20 et p' = 0 ou 1, et
   - au moins un précurseur d'une sous-unité G choisi parmi les précurseurs de formule (I'_{G}) suivante : 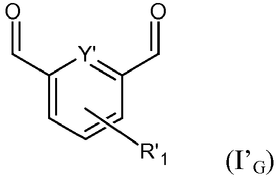 dans laquelle R'₁ représente un atome d'hydrogène ou un radical alkyle ayant de 1 à 4 atomes de carbone et Y' représente un atome d'azote ou C-OH ;
b) la polycondensation desdits précurseurs par chauffage du mélange réactionnel au reflux pour obtenir un polymère dynamique formé d'unités récurrentes de formule (I') suivante : 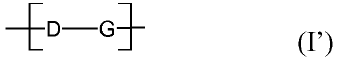 dans laquelle :
   - **D** représente une sous-unité de formule (I_{D}) suivante : 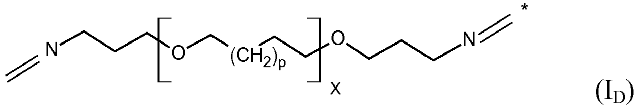 dans laquelle :
      ▪ x est un nombre entier qui varie de 10 à 20 ;
      ▪ p = 0 ou 1; et
      ▪ * est le point d'attachement de D à G par l'intermédiaire d'une liaison imine ;
   - **G** représente une sous-unité de formule (I_{G}) suivante : 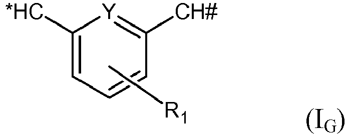 dans laquelle :
      ▪ R₁ représente un atome d'hydrogène ou un radical alkyle ayant de 1 à 4 atomes de carbone,
      ▪ Y représente un atome d'azote ou C-OH,
      ▪ # est le point d'attachement de G à D par l'intermédiaire d'une liaison imine ;
c) la dissolution du polymère ainsi obtenu dans un milieu solvant organique pour obtenir une solution de polymère (Solution P),
d) la dissolution d'un sel d'un métal de transition de formule (II) suivante :

   Mₘ(A)ₙ (II)

   dans laquelle :
   ▪ M est un ion métallique de transition, de préférence choisi parmi Zn²⁺, Fe²⁺, Cu⁺, Ni²⁺, Co²⁺ et Ag⁺,
   ▪ A est un anion monovalent ou divalent, et
   ▪ m et n sont choisis de telle sorte que l'électroneutralité du sel soit respectée,
   dans un solvant pour obtenir une solution dudit sel de formule (II) (solution S),
e) l'addition, à ladite solution P, de la solution S, en une quantité telle qu'au moins 50 % en nombre, et de préférence de 50 à 200 % en nombre, des sous-unités de formule (I_{G}) présentes au sein du polymère soient complexées à un ion métallique de transition,
f) la mise en forme de la membrane et l'évaporation du ou des solvants du milieu réactionnel.

Parmi les anions A du sel de formule (II), on peut notamment citer les anions acétate, trifluorométhanesulfonate, tetrafluoroborate, hexafluorophosphate, nitrate, et perchlorate. Parmi ces anions, l'acétate est particulièrement préféré.

Le sel de formule (II) représente de préférence de 0,5 à 2 équivalents par rapport à la masse totale d'une unité récurrente de formule (I').

Le milieu solvant est de préférence constitué par un solvant organique choisi parmi le tetrahydrofurane (THF), le trichlorométhane (CHCl₃), le dichlorométhane (CHCl₂) et leurs mélanges.

Selon une forme de réalisation préférée de ce procédé, le ou les solvants utilisés le sont sous forme anhydre.

La polycondensation des différentes sous-unités est réalisée au reflux, pendant une durée pouvant varier de 12 à 24 heures.

Les solvants de la solution S, c'est-à-dire les solvants utilisés pour solubiliser le sel de formule (II), sont de préférence choisis parmi les alcools inférieurs tels que l'éthanol, le méthanol et l'acétonitrile. Le méthanol est particulièrement préféré.

La mise en forme des membranes peut être réalisée par exemple par coulage du milieu réactionnel dans un moule ayant une forme correspondant à la forme de la membrane que l'on souhaite obtenir ou par enduction sur un support approprié, puis par évaporation du ou des solvants organiques.

Ce procédé est simple, reproductible et peu coûteux à mettre en oeuvre et conduit à l'obtention du polymère avec un rendement de 100%. Il est écologique dans la mesure où il ne nécessite pas de grosses dépenses énergétiques et ne génère que de l'eau en petite quantité comme sous-produit de la réaction de polycondensation.

Les membranes auto-supportées de l'invention peuvent être utilisées dans des procédés de séparation d'espèces chimiques par membranes, en particulier.

Les membranes de l'invention sont particulièrement efficaces pour la séparation sélective de mélanges gazeux. Les membranes dans lesquelles les sous-unités de formule (I_{G}) sont complexées à des ions Zn²⁺ présentent en particulier une sélectivité améliorée vis-à-vis du dioxyde de carbone. C'est pourquoi les membranes de l'invention présentent un grand intérêt dans divers domaines de l'industrie mettant enjeu du dioxyde de carbone.

Ainsi l'invention a également pour objet, l'utilisation d'une membrane auto-supportée telle que définie précédemment, pour la séparation sélective d'espèces chimiques, en particulier pour la séparation sélective d'espèces gazeuses contenues dans les gaz naturels ou industriels. Selon une forme de réalisation préférée, les ions métalliques sont des ions Zn²⁺ et la membrane est utilisée pour la séparation sélective du dioxyde de carbone.

Un autre objet de l'invention est donc un procédé de séparation d'une espèce chimique, et en particulier d'une espèce gazeuse telle que le dioxyde de carbone, consistant à faire passer un mélange gazeux ou liquide contenant l'espèce que l'on souhaite séparer à travers une membrane polymère auto-supportée conforme à l'invention et telle que décrite précédemment, dans laquelle les ions métalliques sont de préférence des ions Zn²⁺.

Les membranes conformes à l'invention peuvent également être utilisées :
- pour la séparation des hydrocarbures,
- pour la récupération des composés organiques volatils,
- pour le transport facilité des ions Na⁺/K⁺.

La présente invention est illustrée par les exemples de réalisation suivants, auxquels elle n'est cependant pas limitée.

### EXEMPLES

La structure des membranes préparées dans les exemples qui suivent a été étudiée par calorimétrie différentielle à balayage à l'aide d'un calorimètre vendu sous la dénomination TA Instruments 2920 Modulated DSC par la société Perkin Elmer.

Des analyses en spectroscopie infrarouge à transformée de Fournier (ou FTIR : « Fournier Transformation Infrared Spectroscopy ») ont été effectuées sur un spectromètre commercialisé sous la dénomination Nicolet Nexus FTIR/ATR Diamant par la société ThermoFischer.

La détermination des coefficients de perméabilité et de diffusion des différentes membranes a été effectuée par la méthode du temps de retard ou « timelag » en utilisant un perméamètre frontal constitué de deux cellules de perméation séparées par la membrane à tester. La membrane et les deux compartiments ont tout d'abord été dégazés sous vide secondaire pendant au moins 48 heures, à l'aide d'une pompe turbo moléculaire ayant un débit de 50 l.s⁻¹, vendue sous la dénomination commerciale Turbovac 50 par la société Leybold. Les deux compartiments ont ensuite été isolés puis on a introduit le gaz à étudier dans le compartiment situé en amont de la membrane, à une pression de 3,0.10⁵ Pa, cette pression étant plus élevée que la pression mesurée dans le compartiment situé en aval de la membrane. On a enregistré la montée en pression dans le compartiment en aval de la membrane en utilisant un transmetteur de pression vendu sous la dénomination commerciale Baratron par la société MKS Instruments. Cette méthode est basée sur la mesure à volume constant et pression variable. La courbe obtenue permet de déterminer, par la résolution de la deuxième loi de Fick, le coefficient de diffusion lors du régime transitoire et le coefficient de perméabilité quand le régime pseudo stationnaire est atteint.

Les coefficients de solubilité (S) des différentes membranes ont été déterminés à l'aide d'une électrobalance modèle CAHN-1000 dont le fonctionnement est basé sur le principe de gravimétrie, vendue par la société Cahn (USA).

### Exemple 1

### 1) Synthèse de membranes constituées de polymères formés d'unités récurrentes de formule (I) en présence de différentes quantité d'un sel de zinc

Les membranes ont été obtenues par polycondensation des sous-unités D et G, à partir des précurseurs suivants :
- Précurseur de la sous-unité D : poly(tetrahydrofuran) bis(3-aminopropyl) à amines terminales : 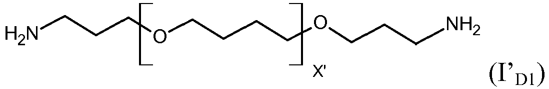 dans laquelle x' est tel que le précurseur de formule (I'_{D1}) à une masse moléculaire d'environ 1100 g/mol ;
- Précurseur de la sous-unité G : 4-*tert*-butyl-2,6-diformylphénol : 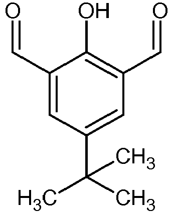 1 équivalent (0,2 g) de 4-*tert*-butyl-2,6-diformylphénol et 1 équivalent (1,0668 g) de poly-(tetrahydrofuran)-bis(3-aminopropyl)-à amines terminale (I'_{D1}) ont été dissous dans 250 ml de THF puis chauffés au reflux sous agitation magnétique pendant 48 heures. La solution de polymère ainsi obtenue a été évaporée et séchée sous vide.

Quatre solutions identiques de polymère ont ensuite été préparées par dissolution de 0,7 g de polymère dans 4 ml de THF.

En parallèle, on a préparé différentes solutions d'acétate de zinc (Zn(CH₃COO)₂) dans 2 ml de méthanol :
- Solution S_{0,5} à 0,5 éq. de Zn(CH₃COO)₂ (soit 0,060 g),
- Solution S₁ à 1 éq. de Zn(CH₃COO)₂ (soit 0,121 g) et
- Solution S₂ à 2 éq. de Zn(CH₃COO)₂ (soit 0,242 g).

Dans ces solutions S_{0,5}, S₁ et S₂, le nombre d'équivalents d'acétate de zinc est exprimé par rapport à la masse de l'unité répétitive du polymère (M_{unité} répétitive = 1270,24 g.mol⁻¹).

Différentes membranes M_{0,5}, M₁ et M₂ ont ensuite été préparées en ajoutant respectivement, au goutte à goutte et sous agitation, les solutions S_{0,5}, S₁ et S₂ à trois des quatre solutions de polymère. Un changement de couleur du jaune à l'orange a été observé. Ce changement de couleur témoigne de la formation instantanée des complexes entre les sous-unités G et les ions Zn²⁺. Chacun des mélanges ainsi obtenu a ensuite été versé dans un pétri en Téflon® de 3,7 cm de diamètre. A titre comparatif, la quatrième solution de polymère a été directement versée dans un pétri en Téflon® de 3,7 cm sans avoir été au préalable additionnée d'une quelconque solution d'acétate de zinc. Les mélanges ont été séchés à température ambiante pendant 2 jours à l'abri de la poussière puis sous vide à 60°C pendant 3 jours supplémentaires. On a ainsi obtenu les membranes M_{0,5}, M₁ et M₂ et la membrane M₀ ne comportant aucun ion Zn²⁺.

Les épaisseurs des membranes auto-supportées obtenues étaient de l'ordre de 300 à 600 µm.

Les caractéristiques et structures de chacune des membranes ainsi préparées étaient les suivantes :

### Membrane M₀

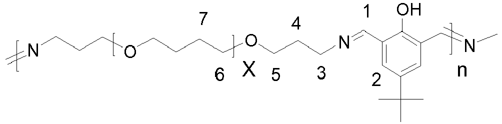

**¹H-RMN** (300 MHz, CDCl₃) : 8,49 (él, 2H, CH=N) ; 7,57 (él, 2H, CH-2) ; 3,55 (t, 4H, CH-5) ; 3,41 (t, 4H, CH-3) ; 3,39 (él, 5'H, CH-6) ; 1,92 (t, 4H, CH-4) ; 1,53 (él, 54H, CH-7) ; 1,14-1,24 (m, 9H, tBu).

**IR (cm⁻¹) :** 2937, 2852, 2795, 1636.1598, 1465, 1446, 1364, 1206,1103

### Analyse par calorimétrie différentielle à balayage (DSC) :

- **1^{er} cycle :**
   Température de transition vitreuse : **Tg** = -68,5°C,
   Température de cristallisation : **Tc** = -14,80°C,
   Température de fusion : **Tm** = 9,23°C,
   Enthalpie de fusion : **DHm** = 23,06 J/g.
- **2^{ème} cycle:**
   **Tg** = -68,25°C
   **Tc** = -24,11 °C
   **Tm** = 10,16°C
   **DHm :** 30,62 J/g

### Membrane M_{0,5}

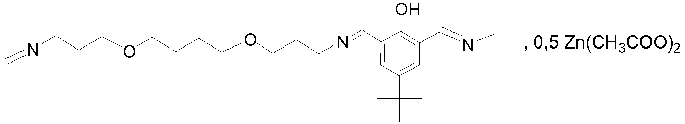

**¹H-RMN** (300 MHz, CDCl₃) : 8,32-8,18 (d él, 2H, CH=N) ; 7,42 (br, 2H, CH-2) ; 3.53 (él, 4H, CH-5) ; 3,22 (él, 58H, CH-6,3) ; 1,76-1,62 (m, 5,5H, CH-4, CH₃-COO⁻) ; 1,41 (él, 54H, CH-7) ; 1.1 (m, 9H, tBu).

**DSC 1^{er} cycle : Tg :** -68,25°C ; 29,50°C

**DSC 2^{ème} cycle : Tg :** -69,51 °C ; 20,04°C

### Membrane M₁

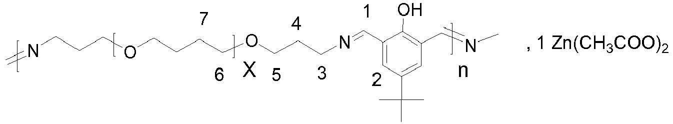

**¹H-RMN** (300 MHz, CDCl₃) : 8,11 (él, 2H, CH=N) ; 7,45 et 7,31 (d él, 2H, CH-2) ; 3,51 (él, 4H, CH-5) ; 3,28 (él, 58H, CH-6,3) ; 1,92 (s, 3H, CH₃-COO⁻) ; 1,82 (él, 4H, CH-4) ; 1,47 (él, 54H, CH-7) ; 1,11 (m, 9H, tBu).

**IR (cm⁻¹) :** 2933, 2652, 2794, 1609, 1581, 1412, 1363, 1232, 1206, 1104, 1023, 841, 777, 667, 614, 498.

**DSC 1^{èr} cycle : Tg :** -67,30°C ; 12,41°C

**DSC 2^{ème} cycle : Tg :** -67,81 °C ; 7,37°C

### Membrane M₂

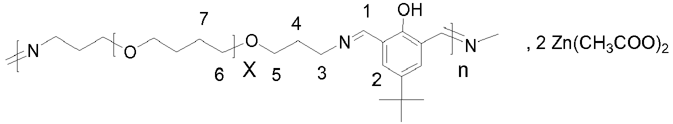

**¹H-RMN** (300 MHz, CDCl₃) : 8,13 (él, 2H, CH=N) ; 7,25 (él, 2H, CH-2) ; 3,70 (él, 4H, CH-5) ; 3,40 (él, 58H, CH-6,3) ; 1,90 (s, 6H, CH₃-COO⁻) ; 1,82 (él, 4H, CH-4) ; 1,51 (él, 54H, CH-7) ; 1,20 (m, 9H, tBu).

**IR (cm⁻¹) :** 2933, 2652, 2794, 1609, 1581, 1412, 1363, 1232, 1206, 1104, 1023, 841, 777, 667, 614, 498.

**DSC 1^{èr} cycle : Tg** = -63,77°C ; 129,97°C

**DSC 2**^{è}**^{me} cycle: Tg** = -65,28°C ; 104,24°C

Il ressort des valeurs données ci-dessus que la présence de Zn²⁺ influence légèrement les valeurs de Tg qui augmentent de -68,25 (M₀) à -63,77 (M₂). Le polymère de la membrane M₀ possède une température de cristallisation de -24,11°C qui disparaît pour les membranes intégrant du Zn²⁺. La réticulation créée par la complexation des sous-unités G en présence de Zn²⁺ élimine la partie cristalline du polymère.

Par ailleurs, la résistance physique et mécanique des polymères est d'autant plus importante que la quantité d'agent réticulant, c'est-à-dire d'ions Zn²⁺ est importante.

Une analyse par diffraction des rayons X de poudre sur ces membranes a été réalisée et a montré la nature amorphe des polymères. Les diffractogrammes (non représentés) présentent essentiellement un halo (raie élargie) à une valeur de 2θ= 21-23° (d=4,5-4,8 A°) représentatives des distances des interactions d'hydrogène entre les chaînes polymériques parallèles présentant des distances de contact de Van der Waals.

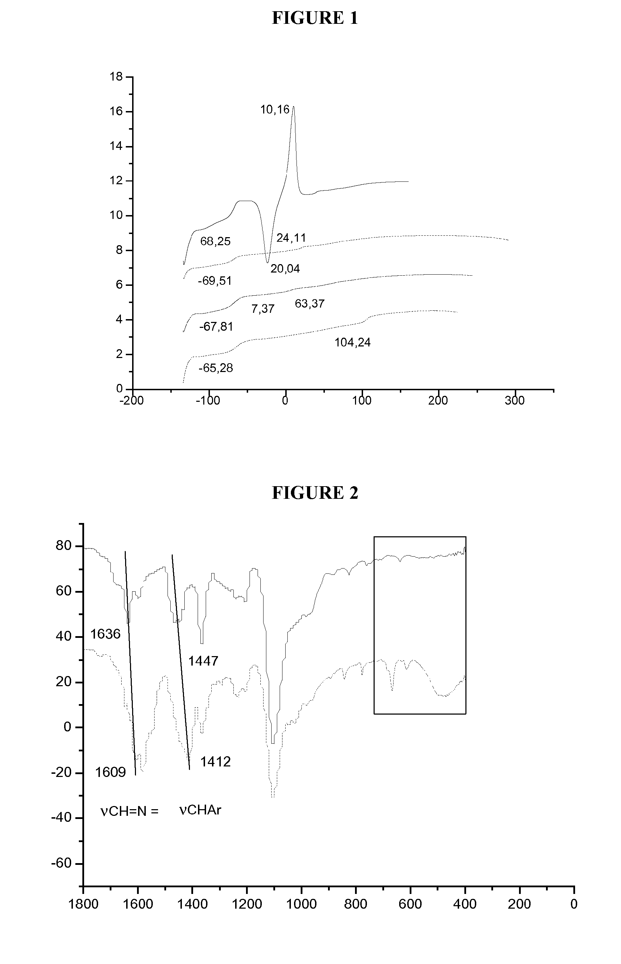

Les analyses de calorimétrie différentielle à balayage des différentes sont représentées sur la figure 1 annexée sur laquelle le flux de chaleur (en watts/g) est fonction de la température en °C. Sur cette figure les courbes correspondent respectivement dans cet ordre, et en partant de la courbe la plus haute, aux membranes M₀, M_{0,5}, M₁ et M₂.

Ces courbes révèlent que les polymères constituant les membranes sont des élastomères qui présentent des températures de transition vitreuses comprises entre -69,51 et -63,77°C.

La mise en évidence du phénomène de complexation entre les sous-unités G et les ions Zn²⁺ a notamment été effectuée spectroscopie Infra-rouge à transformée de Fournier.

La figure 2 annexée montre les spectres FITR des membranes M₀ (spectre supérieur) et M₂ (spectre inférieur). Sur cette figure, la transmittance est fonction du nombre d'onde (cm⁻¹).

En comparant les spectres des deux membranes **M₂** et **M₀**, on constate que la bande vibrationnelle ν_{CH=N} = 1636,54 cm⁻¹ se déplace vers des plus faibles valeurs de nombres d'ondes, également pour ν_{CHAr} = 1446,75 cm⁻¹ qui se déplace vers 1412,26 cm⁻¹.

L'apparition des deux bandes v(Zn-O) à 666,76 cm⁻¹ et v(Zn-N) à 477,81 cm⁻¹ indique la formation des complexes entre les sous-unités G et les ions Zn²⁺ présents dans la membrane M₂.

Le taux de gonflement des membranes M₀, M_{0,5}, M₁ et M₂ dans l'eau ou dans un mélange eau/THF (8/2) a également été étudié. Les sites échangeurs de solvant peuvent en effet être solvatés tandis que les espaces libres résultant de la réticulation des chaînes polymères peuvent se remplir de solvant. Le taux de gonflement permet d'avoir une indication de la capacité des membranes à interagir avec différentes molécules.

Expérimentalement, le taux de gonflement a été déterminé par la méthode de prise/perte hydrique. Pour ce faire les membranes ont été pesées à l'état sec puis après immersion dans l'eau pendant 5 heures, c'est-à-dire jusqu'à stabilisation de la masse de la membrane, et essuyage des faces. Le taux de gonflement en masse Gₘₐₛₛₑ a été calculé suivant la relation Gₘₐₛₛₑ= (m-m₀) /m₀x100 ; avec m₀ = masse de la membrane sèche et m : masse de la membrane après immersion dans l'eau.

Les résultats obtenus pour chacune des membranes sont reportés dans le tableau 1 ci-après :

**TABLEAU 1**

| Membranes | G _{masse eau} |
|---|---|
| M₀ | 28,7 |
| M_{0,5} | 215,6 |
| M₁ | 432,7 |
| M₂ | 472,6 |

Ces résultats montrent que le taux de gonflement augmente brutalement à partir de 0,5 équivalent de Zn(CH₃COO)₂ et devient presque constant à 1 et 2 équivalents de Zn²⁺. L'ion métallique se lie facilement avec les molécules d'eau ou du solvant ce qui contribue au gonflement de la membrane polymère.

### 2) Etude des propriétés de perméation et de sorption des membranes synthétisées

Deux mesures ont été effectuées pour caractériser les propriétés de transport gazeux des membranes synthétisées dans cet exemple, c'est-à-dire ayant différentes teneurs ions Zn²⁺.

La détermination des coefficients de perméabilité et de diffusion ainsi que la détermination des coefficients de solubilité (S).

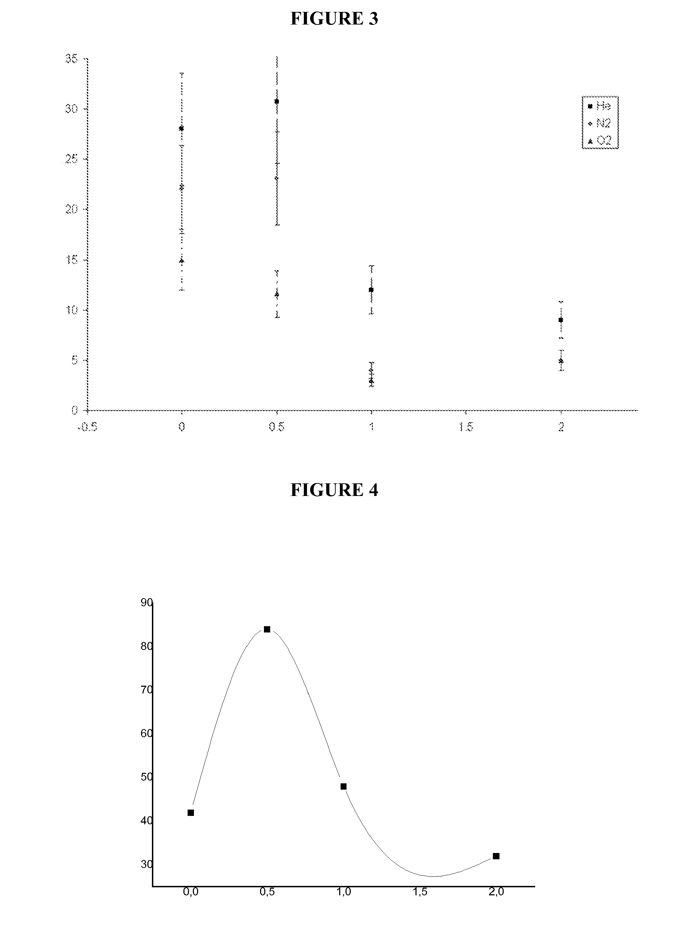

La figure 3 annexée montre l'évolution des coefficients de perméabilité (Barrer) des membranes vis-à-vis de l'hélium (He : carrés pleins), de l'azote (N₂ : ronds pleins) et de l'oxygène (O₂ : triangles pleins), en fonction de la teneur en ions Zn²⁺ (en équivalents).

La même mesure a été effectuée pour le dioxyde de carbone et les résultats sont reportés sur la figure 4 annexée sur laquelle l'évolution des coefficients de perméabilité (Barrer) au dioxyde de carbone est fonction de la teneur en ions Zn²⁺ (en équivalents).

On peut remarquer que la perméabilité des membranes vis-à-vis du CO₂ (32-84 Barrers) est plus importante que celle des autres gaz. Ces courbes se présentent sous forme de cloche. Si les valeurs de perméabilité vis-à-vis de l'hélium (2,63 Å) et de l'azote (3,64 Å) peuvent être expliquées par l'effet de la taille des molécules, les valeurs élevées de perméabilité élevées vis-à-vis du CO₂ indiquent un effet de solubilisation ou d'interaction au sein du polymère, dû à la présence des ions Zn²⁺.

La perméabilité des membranes vis-à-vis du CO₂ augmente de 42 à 84 Barrers en présence de 0,5 équivalent de Zn²⁺.

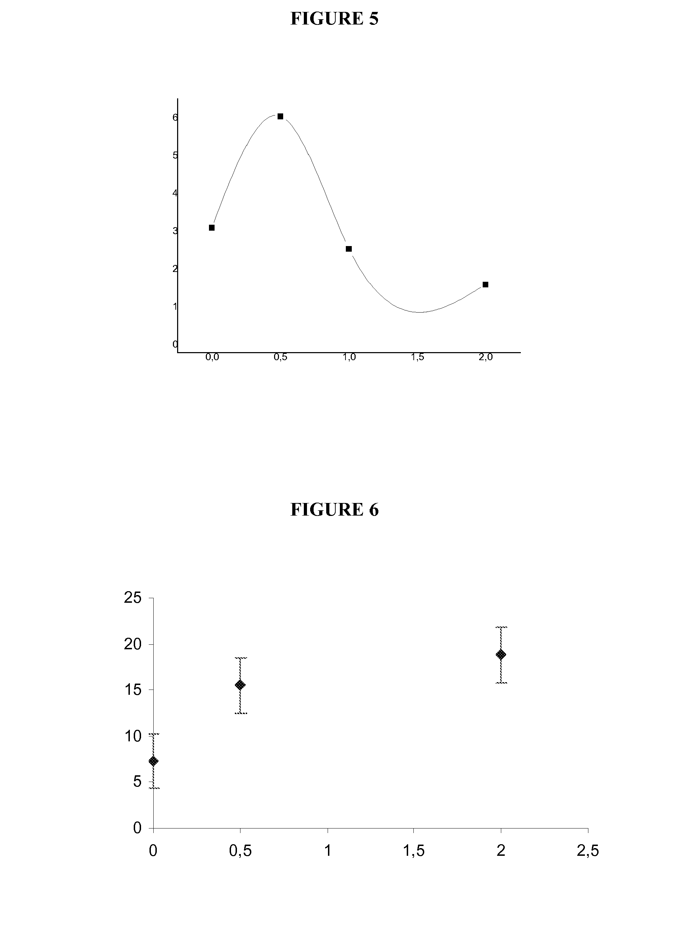

La figure 5 annexée représente l'évolution des valeurs de coefficients de diffusion au dioxyde de carbone (D_{CO2}) (10⁻⁷.cm².s⁻¹), déterminées par la méthode du « time lag », exprimée en fonction de la teneur en ions Zn²⁺ (en équivalents).

La courbe obtenue présente également une forme de cloche montrant que les meilleurs résultats sont obtenus avec les membranes dans lesquelles la teneur en ions Zn²⁺ varie, avec un maximum à 0,5 équivalent.

Les paramètres de solubilité dans le phénomène global de perméabilité au CO₂, on été évalués en mesurant la masse de CO₂ absorbée à l'aide de la balance de Cahn pour les membranes M₀, M_{0,5} et M₂.

Les résultats obtenus sont représentés sur la figure 6 annexée sur laquelle le coefficient de sorption du CO₂ (S CO₂ 10⁻³.cm³ (STP).cm⁻¹) est fonction de la teneur en ions Zn²⁺ (en équivalent).

Ces résultats montrent que les coefficients de sorption augmentent avec la teneur en ions Zn²⁺ au sein de la membrane en passant de 7,25 cm³(STP) cm³.cm⁻¹_{Hg} pour 0 équivalent de Zn²⁺ à 18,8 cm³(STP) cm³.cm⁻¹_{Hg} pour 2 équivalents de Zn²⁺.

A 0,5 et 2 équivalents d'ions Zn²⁺, les valeurs de S sont supérieures à celles reportées par Lin et Freeman pour des films de polyoxyde d'éthylène pur (Journal of Membranes Science, 2004, 239, 105-117) et à celles obtenues par Stern S.A. et al. pour différents polymères silicones (Journal of Polymer Science B : Polymer Physical., 1987,25, 1263-1298).

L'ensemble de ces résultats montre que la perméabilité des membranes vis-à-vis du dioxyde de carbone augmente avec la quantité de Zn²⁺ jusqu'à une valeur proche de 0,5 Zn²⁺ puis chute à partir de 1 équivalent de Zn²⁺. Par contre, la sélectivité augmente (α _{CO2/N2} = 12) et ceci est vrai également pour les valeurs de coefficients de diffusion. Les coefficients de sorption augmentent avec la quantité de Zn²⁺ ajoutée. Ces résultats sont expliqués en tenant compte de deux facteurs : à 0,5 équivalent de Zn²⁺, l'augmentation de la valeur du coefficient de perméabilité est due à la présence du cation Zn²⁺ qui semble interagir avec le dioxyde de carbone en créant un phénomène de complexation-décomplexation. A une quantité plus élevée, on observe une augmentation de la réticulation créée par la formation de nombreux sites de complexation. La réticulation diminue généralement la perméabilité.

Les valeurs des coefficients de solubilité S_{time-lag} obtenues par les expériences de perméabilité au dioxyde de carbone (S=Pe/Dₑₓₚ) et les valeurs expérimentales S' sont reportées dans le tableau 2 ci-après.

**TABLEAU 2**

| Membranes | S_{time-lag} | S' |
|---|---|---|
| | 10⁻³(cm³(STP)cm³cm⁻¹_{Hg}) | 10⁻³ (cm³(STP)cm⁻³cm⁻¹_{Hg}) |
| M₀ | 13,5 | 7,2 |
| M_{0,5} | 13,1 | 12,1 |
| M₁ | 13,9 | - |
| M₂ | 20,0 | 18,8 |

Les deux valeurs S et S' sont très proches confirmant ainsi l'exactitude des mesures.

Les sélectivités idéales calculées à partir des coefficients de perméabilité des membranes précédemment testées sont reportées dans le tableau 3 ci-après :

**TABLEAU 3**

| Sélectivité idéale | Quantité d'ions Zn²⁺ (équivalent) | | | |
|---|---|---|---|---|
| | 0 (M₀) | 0,5 (M_{0,5}) | 1 (M₁) | 2 (M₂) |
| α(CO₂/He) | 1,5 | 2,2 | 4 | 3,6 |
| α(CO₂/N₂) | 1,9 | 3 | 12 | 6,4 |

On observe que la sélectivité idéale α (CO₂/N₂) augmente de 1,9 pour la membrane M₀ à 12 pour la membrane M₁. Pour la membrane M₂, l'augmentation du coefficient de solubilité (S = 10⁻³ 18,8 cm³(STP) cm³.cm⁻¹ _{Hg}) n'était pas suffisante pour compenser la diminution de la fraction de volume libre (D de M₂ = 1,610⁻⁷.cm².s⁻¹).

Ces résultats montrent que même si le procédé est contrôlé par les phénomènes de sorption dus essentiellement à Zn²⁺, les paramètres de diffusion deviennent plus influents sous l'effet de la réticulation.

Les membranes conjuguant les meilleures performances en termes de diffusion et de solubilité sont celles obtenues en présence d'une quantité d'ions Zn(II) comprise entre 0,5 et 1 équivalent.

## Revendications

1. Membrane polymère auto-supportée, **caractérisée en ce qu'**elle est constituée par un polymère dynamique formé d'unités récurrentes de formule (I) suivante : 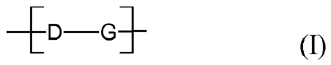 dans laquelle :
- **D** représente une sous-unité de formule (I_{D}) suivante : 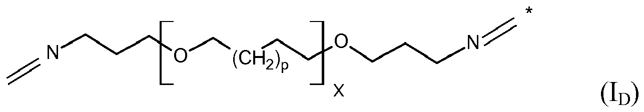 dans laquelle :
▪ x est un nombre entier qui varie de 10 à 20 ;
▪ p= 0 ou 1; et
▪ * est le point d'attachement de D à G par l'intermédiaire d'une liaison imine ;
- G représente une sous-unité de formule (I_{G}) suivante : 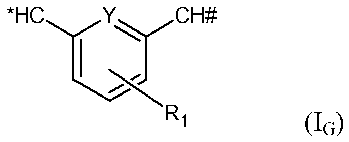 dans laquelle :
▪ R₁ représente un atome d'hydrogène ou un radical alkyle ayant de 1 à 4 atomes de carbone,
▪ Y représente un atome d'azote ou C-OH,
▪ # est le point d'attachement de G à D par l'intermédiaire d'une liaison imine ;
étant entendu qu'au moins 50 % en nombre desdites sous-unités de formule (I_{G}) présentes dans ledit polymère forment un complexe avec un ion métallique de transition.

2. Membrane selon la revendication 1, **caractérisée en ce que** l'ion métallique de transition est choisi parmi Zn²⁺, Fe²⁺, Cu⁺, Ni²⁺, Co²⁺ et Ag⁺.

3. Membrane selon la revendication 1 ou 2, **caractérisée en ce que** les radicaux alkyle mentionnés pour le radical R₁ de la sous-unité de formule (I_{G}) sont choisis parmi les radicaux méthyle, éthyle, n-propyle, n-butyle et *t*-butyle.

4. Membrane selon la revendication 3, **caractérisée en ce que** le radical R₁ de la sous-unité de formule (I_{G}) est un radical *t*-butyle en position para par rapport à Y.

5. Membrane selon l'une quelconque des revendications 1 à 3, **caractérisée en ce que** la sous-unité (I_{G}) est choisie parmi les sous-unités (I_{G1}) et (I_{G2}) suivantes : 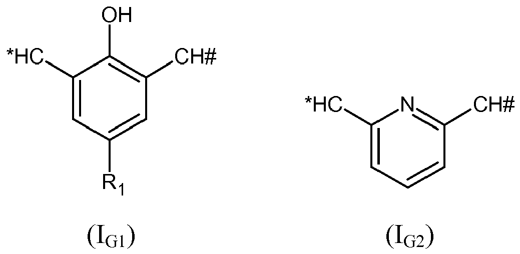 étant entendu que dans la sous-unité de formule (I_{G1}), le radical R₁ a les mêmes significations que celles indiquées à l'une quelconque des revendications 1 à 3 pour la sous-unité de formule (I_{G}).

6. Membrane selon l'une quelconque des revendications précédentes, **caractérisée en ce que** le pourcentage en nombre de sous-unités de formule (I_{G}) complexées à un ion métallique de transition varie de 50 à 200 %.

7. Membrane selon l'une quelconque des revendications précédentes, **caractérisée en ce qu'**elle a une épaisseur variant de 300 à 600 µm.

8. Procédé de préparation d'une membrane polymère auto-supportée constituée par au moins un polymère dynamique formé d'unités récurrentes de formule (I) telle que définie à l'une quelconque des revendications 1 à 7, **caractérisé en ce qu'**il comprend les étapes suivantes :
a) la préparation d'un mélange réactionnel comprenant, en solution dans au moins un solvant organique :
- au moins un précurseur d'une sous-unité D choisi parmi les précurseurs de formule (I'_{D}) suivante : 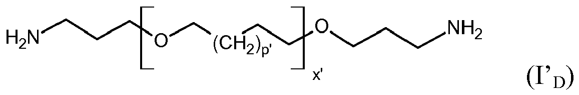 dans laquelle x' est un nombre entier qui varie de 10 à 20 et p' = 0 ou 1, et
- au moins un précurseur d'une sous-unité G choisi parmi les précurseurs de formule (I'_{G}) suivante : 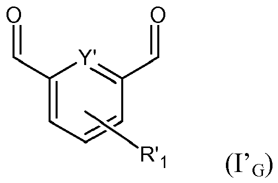 dans laquelle R'₁ représente un atome d'hydrogène ou un radical alkyle ayant de 1 à 4 atomes de carbone et Y' représente un atome d'azote ou C-OH ;
b) la polycondensation desdits précurseurs par chauffage du mélange réactionnel au reflux pour obtenir un polymère formé d'unités récurrentes de formule (I') ; 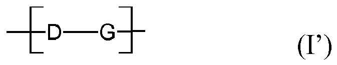 dans laquelle :
- **D** représente une sous-unité de formule (I_{D}) suivante : 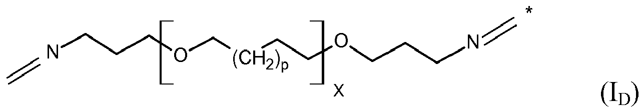 dans laquelle :
▪ x est un nombre entier qui varie de 10 à 20 ;
▪ p = 0 ou 1; et
▪ * est le point d'attachement de D à G par l'intermédiaire d'une liaison imine ;
- **G** représente une sous-unité de formule (I_{G}) suivante : 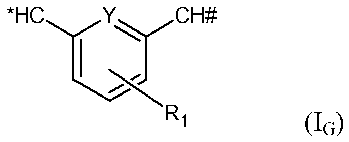 dans laquelle :
▪ R₁ représente un atome d'hydrogène ou un radical alkyle ayant de 1 à 4 atomes de carbone,
▪ Y représente un atome d'azote ou C-OH,
▪ # est le point d'attachement de G à D par l'intermédiaire d'une liaison imine ;
c) la dissolution du polymère ainsi obtenu dans un milieu solvant organique pour obtenir une solution de polymère (Solution P),
d) la dissolution d'un sel d'un métal de transition de formule (II) suivante :
Mₘ(A)ₙ (II)
dans laquelle :
▪ M est un ion métallique de transition,
▪ A est un anion monovalent ou divalent, et
m et n sont choisis de telle sorte que l'électroneutralité du sel soit respectée,
dans un solvant approprié pour obtenir une solution dudit sel de formule (II) (solution S),
e) l'addition, à ladite solution P, de la solution S, en une quantité telle qu'au moins 50 % en nombre des sous-unités de formule (I_{G}) présentes au sein du polymère soient complexées à un ion métallique de transition,
f) la mise en forme de la membrane et l'évaporation du ou des solvants du milieu réactionnel.

9. Procédé selon la revendication 8, **caractérisé en ce que** M est un ion métallique de transition choisi parmi Zn²⁺, Fe²⁺, Cu⁺, Ni²⁺, Co²⁺ et Ag⁺.

10. Procédé selon la revendication 8 ou 9, **caractérisé en ce que** la solution S est ajoutée à la solution P en une quantité telle que 50 à 200 % en nombre des sous-unités de formule (I_{G}) présentes au sein du polymère soient complexées à un ion métallique de transition.

11. Procédé selon l'une quelconque des revendications 8 à 10, **caractérisé en ce que** les anions A du sel de formule (II) sont choisis parmi les anions acétate, trifluorométhanesulfonate, tetrafluoroborate, hexafluorophosphate, nitrate, et perchlorate.

12. Procédé selon l'une quelconque des revendications 8 à 11, **caractérisé en ce que** le sel de formule (II) représente de 0,5 à 2 équivalents par rapport à la masse totale d'une unité récurrente de formule (I').

13. Procédé selon l'une quelconque des revendications 8 à 12, **caractérisé en ce que** milieu solvant est constitué par un solvant organique choisi parmi le tetrahydrofurane, le trichlorométhane, le dichlorométhane et leurs mélanges.

14. Procédé selon l'une quelconque des revendications 8 à 13, **caractérisé en ce que** les solvants de la solution S sont choisis parmi les alcools inférieurs et l'acétonitrile.

15. Utilisation d'une membrane polymère auto-supportée telle que définie à l'une quelconque des revendications 1 à 7, dans des procédés de séparation d'espèces chimiques par membranes.

16. Utilisation selon la revendication 15, dans des procédés de pervaporation, d'osmose inverse, de nanofiltration et de séparation gazeuse.

17. Utilisation d'une membrane polymère auto-supportée telle que définie à l'une quelconque des revendications 1 à 7 et dans laquelle les ions métalliques sont des ions Zn²⁺, pour la séparation sélective du dioxyde de carbone.

18. Procédé de séparation d'une espèce chimique, **caractérisé en ce qu'**il consiste à faire passer un mélange gazeux ou liquide contenant l'espèce que l'on souhaite séparer à travers une membrane polymère auto-supportée telle que définie à l'une quelconque des revendications 1 à 7.

19. Utilisation d'une membrane polymère auto-supportée telle que définie à l'une quelconque des revendications 1 à 7, pour la séparation des hydrocarbures, la récupération des composés organiques volatils, ou le transport facilité des ions Na⁺/K⁺.

## Patentansprüche

1. Selbsttragende Polymermembran, **dadurch gekennzeichnet, dass** sie von einem dynamischen Polymer gebildet wird, das von sich wiederholenden Einheiten der folgenden Formel (I) gebildet wird: 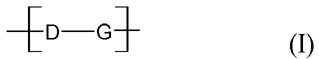 wobei:
- **D** eine Untereinheit der folgenden Formel (I_{D}) darstellt: 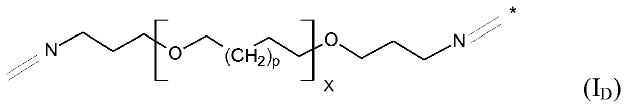 wobei:
• x eine ganze Zahl ist, die von 10 bis 20 schwankt,
• p = 0 oder 1 und
• * der Anlagerungspunkt von D an G mit Hilfe einer Iminobindung ist,
- **G** eine Untereinheit der folgenden Formel (I_{G}) darstellt: 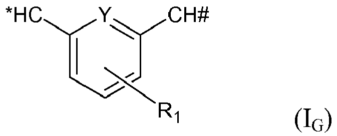 wobei:
• R₁ ein Wasserstoffatom oder ein Alkylradikal mit 1 bis 4 Kohlenstoffatomen darstellt,
• Y ein Stickstoffatom oder C-OH darstellt,
• # der Anlagerungspunkt von G an D mit Hilfe einer Iminobindung ist,
wobei es sich versteht, dass mindestens zahlenmäßig 50 % der Untereinheiten der Formel (I_{G}), die in dem Polymer vorhanden sind, mit einem metallischen Übergangsion einen Komplex bilden.

2. Membran nach Anspruch 1, **dadurch gekennzeichnet, dass** das metallische Übergangsion aus Zn²⁺, Fe²⁺, Cu⁺, Ni²⁺, Co²⁺ und Ag⁺ ausgewählt ist.

3. Membran nach Anspruch 1 oder 2, **dadurch gekennzeichnet, dass** die für das Radikal R₁ der Untereinheit der Formel (I_{G}) erwähnten Alkylradikale aus den Metyl-, Ethyl-, n-Propyl-, n-Butyl- und *t*-Butylradikalen ausgewählt sind.

4. Membran nach Anspruch 3, **dadurch gekennzeichnet, dass** das Radikal R₁ der Untereinheit der Formel (I_{G}) ein *t*-Butylradikal in para-Position im Verhältnis zu Y ist.

5. Membran nach einem der Ansprüche 1 bis 3, **dadurch gekennzeichnet, dass** die Untereinheit (I_{G}) aus den folgenden Untereinheiten (I_{G1}) und (I_{G2}) ausgewählt ist: 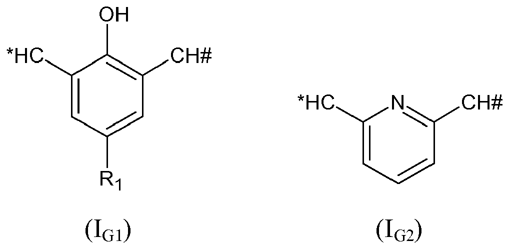 wobei es sich versteht, dass in der Untereinheit der Formel (I_{G1}) das Radikal R₁ dieselben Bedeutungen hat wie die, die in einem der Ansprüche 1 bis 3 für die Untereinheit (I_{G}) angegeben sind.

6. Membran nach einem der vorangehenden Ansprüche, **dadurch gekennzeichnet, dass** der zahlenmäßige Prozentsatz der mit einem metallischen Übergangsion komplexierten Untereinheiten der Formel (I_{G}) von 50 bis 200 % schwankt.

7. Membran nach einem der vorangehenden Ansprüche, **dadurch gekennzeichnet, dass** sie eine Dicke hat, die von 300 bis 600 µm schwankt.

8. Herstellungsverfahren einer selbsttragenden Polymermembran, die von mindestens einem dynamischen Polymer gebildet wird, das von sich wiederholenden Einheiten der Formel (I) gebildet wird, wie nach einem der Ansprüche 1 bis 7 definiert, **dadurch gekennzeichnet, dass** es die folgenden Schritte umfasst:
a) das Zubereiten eines Redaktionsgemischs, das gelöst in mindestens einem organischen Lösungsmittel umfasst:
- mindestens einen Vorläufer einer Untereinheit D, der aus den Vorläufern der folgenden Formel (I'_{D}) ausgewählt ist: 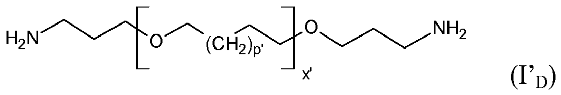 wobei x' eine ganze Zahl ist, die von 10 bis 20 schwankt, und p' = 0 oder 1 und
- mindestens einen Vorläufer einer Untereinheit G, der aus den Vorläufern der folgenden Formel (I'_{G}) ausgewählt ist: 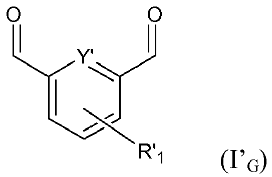 wobei R'₁ ein Wasserstoffatom oder ein Alkylradikal mit 1 bis 4 Kohlenstoffatomen darstellt und Y' ein Stickstoffatom oder C-OH darstellt,
b) die Polykondensation der Vorläufer durch Erhitzen des Reaktionsgemischs im Rückfluss, um ein Polymer zu erhalten, das aus sich wiederholenden Einheiten der Formel (I') gebildet ist, 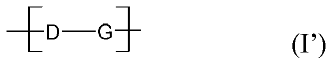 wobei:
- **D** eine Untereinheit der folgenden Formel (I_{D}) darstellt: 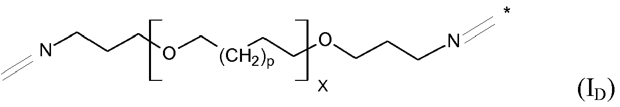 wobei:
• x eine ganze Zahl ist, die von 10 bis 20 schwankt,
• p =0 oder 1 und
• * der Anlagerungspunkt von D an G mit Hilfe einer Iminobindung ist,
- G eine Untereinheit der folgenden Formel (I_{G}) darstellt: 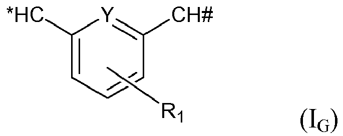
wobei:
• R₁ ein Wasserstoffatom oder ein Alkylradikal mit 1 bis 4 Kohlenstoffatomen darstellt,
• Y ein Stickstoffatom oder C-OH darstellt,
• # der Anlagerungspunkt von G an D mit Hilfe einer Iminobindung ist,
c) das Auflösen des derart hergestellten Polymers in einem organischen Lösungsmedium, um eine Polymerlösung (Lösung P) zu erhalten,
d) das Auflösen eines Salzes eines Übergangsmetalls der folgenden Formel (II):
Mₘ(A)ₙ (II)
wobei:
• M ein metallisches Übergangsion ist,
• A ein einwertiges oder zweiwertiges Anion ist und
m und n derart ausgewählt sind, dass die Elektroneutralität des Salzes respektiert bleibt,
in einem geeigneten Lösungsmittel, um eine Lösung des Salzes der Formel (II) (Lösung S) zu erhalten,
e) das Hinzufügen zu der Lösung P der Lösung S in einer Menge, die derart ist, dass zahlenmäßig mindestens 50 % der Untereinheiten der Formel (I_{G}), die im Polymer vorhanden sind, mit einem metallischen Übergangsion komplexiert werden,
c) das Formen der Membran und das Verdampfen des oder der organischen Lösungsmittel des Reaktionsgemischs.

9. Verfahren nach Anspruch 8, **dadurch gekennzeichnet, dass** M ein metallisches Übergangsion ist, das aus Zn²⁺, Fe²⁺, Cu⁺, Ni²⁺, Co²⁺ und Ag⁺ ausgewählt ist.

10. Verfahren nach Anspruch 8 oder 9, **dadurch gekennzeichnet, dass** die Lösung S der Lösung P in einer Menge hinzugefügt wird, die derart ist, dass zahlenmäßig 50 bis 200 % der Untereinheiten der Formel (I_{G}), die in dem Polymer vorhanden sind, mit einem metallischen Übergangsion komplexiert werden.

11. Verfahren nach einem der Ansprüche 8 bis 10, **dadurch gekennzeichnet, dass** die Anionen A des Salzes der Formel (II) aus den Acetat-, Trifluormethansulfonat-, Tetrafluorborat-, Hexafluorphosphat-, Nitrat- und Perchloratanionen ausgewählt sind.

12. Verfahren nach einem der Ansprüche 8 bis 11, **dadurch gekennzeichnet, dass** das Salz der Formel (II) 0,5 bis 2 Äquivalente im Verhältnis zur Gesamtmasse einer sich wiederholenden Einheit der Formel (I') darstellt.

13. Verfahren nach einem der Ansprüche 8 bis 12, **dadurch gekennzeichnet, dass** das Lösungsmedium von einem organischen Lösungsmittel gebildet ist, das aus dem Tetrahydrofuran, dem Trichlormethan, dem Dichlormethan und ihren Gemischen ausgewählt ist.

14. Verfahren nach einem der Ansprüche 8 bis 13, **dadurch gekennzeichnet, dass** die Lösungsmittel der Lösung S aus den niedrigen Alkoholen und dem Acetonitril ausgewählt sind.

15. Verwendung einer selbsttragenden Polymermembran nach einem der Ansprüche 1 bis 7 in Trennungsverfahren chemischer Spezies durch Membranen.

16. Verwendung nach Anspruch 15 in Verfahren der Pervaporation, der Umkehrosmose, der Nanofiltration und der Gasseparation.

17. Verwendung einer selbstragenden Polymermembran nach einem der Ansprüche 1 bis 7, wobei die Metallionen für die selektive Trennung des Kohlendioxids Zn⁺-Ionen sind.

18. Trennungsverfahren einer chemischen Spezies, **dadurch gekennzeichnet, dass** es darin besteht, ein gasförmiges oder flüssiges Gemisch, das die Spezies enthält, die separiert werden soll, durch eine selbsttragende Polymermembran nach einem der Ansprüche 1 bis 7 zu leiten.

19. Verwendung einer selbsttragenden Polymermembran nach einem der Ansprüche 1 bis 7 für die Trennung der Kohlenwasserstoffe, die Rückgewinnung der flüchtigen organischen Verbindungen oder den erleichterten Transport der Na/K⁺-Ionen.

## Claims

1. A self-supporting polymeric membrane, **characterized in that** it is formed from a dynamic polymer formed from repeating units of formula (I) below: 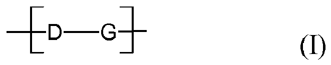 in which:
- **D** represents a subunit of formula (I_{D}) below: 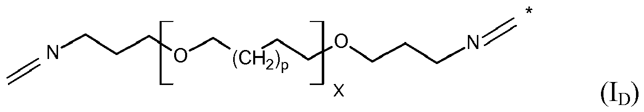 in which:
▪ x is an integer ranging from 10 to 20;
▪ p = 0 or 1; and
▪ * is the point of attachment of D to G via an imine bond;
- **G** represents a subunit of formula (I_{G}) below: 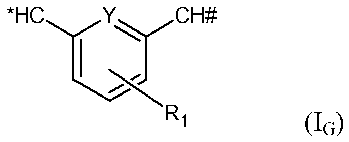 in which:
▪ R₁ represents a hydrogen atom or an alkyl radical containing from 1 to 4 carbon atoms,
▪ Y represents a nitrogen atom or C-OH,
▪ # is the point of attachment of G to D via an imine bond;
it being understood that at least 50% by number of said subunits of formula (I_{G}) present in said polymer form a complex with a transition metal ion.

2. The membrane as claimed in claim 1, **characterized in that** the transition metal ion is chosen from Zn²⁺, Fe²⁺, Cu⁺, Ni²⁺, Co²⁺ and Ag⁺.

3. The membrane as claimed in claim 1 or 2, **characterized in that** the alkyl radicals mentioned for the radical R₁ of the subunit of formula (I_{G}) are chosen from methyl, ethyl, n-propyl, n-butyl and t-butyl radicals.

4. The membrane as claimed in claim 3, **characterized in that** the radical R₁ of the subunit of formula (I_{G}) is a t-butyl radical in the para position relative to Y.

5. The membrane as claimed in any one of claims 1 to 3, **characterized in that** the subunit (I_{G}) is chosen from the subunits (I_{G1}) and (I_{G2}) below: 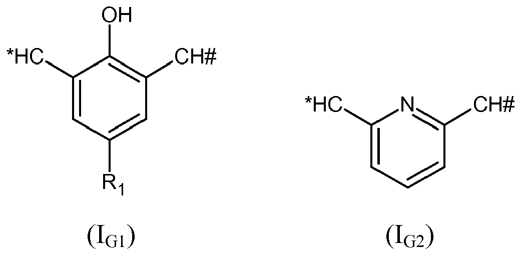 it being understood that in the subunit of formula (I_{G1}), the radical R₁ has the same meanings as those indicated in any one of claims 1 to 3 for the subunit of formula (I_{G}).

6. The membrane as claimed in any one of the preceding claims, **characterized in that** the numerical percentage of subunits of formula (I_{G}) complexed to a transition metal ion ranges from 50% to 200%.

7. The membrane as claimed in any one of the preceding claims, **characterized in that** it has a thickness ranging from 300 to 600 µm.

8. A process for preparing a self-supporting polymer membrane formed by at least one dynamic polymer formed from repeating units of formula (I) as defined in any one of claims 1 to 7, **characterized in that** it comprises the following steps:
a) the preparation of a reaction mixture comprising, in solution in at least one organic solvent:
- at least one precursor of a subunit D chosen from the precursors of formula (I'_{D}) below: 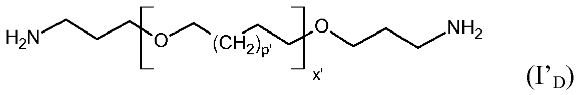 in which x' is an integer ranging from 10 to 20 and p' = 0 or 1, and
- at least one precursor of a subunit G chosen from the precursors of formula (I'_{G}) below: 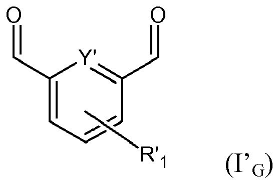 in which R'₁ represents a hydrogen atom or an alkyl radical containing from 1 to 4 carbon atoms and Y' represents a nitrogen atom or C-OH;
b) the polycondensation of said precursors by heating the reaction mixture to reflux to obtain a polymer formed from repeating units of formula (I'): 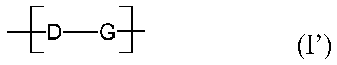 in which:
- **D** represents a subunit of formula (I_{D}) below: 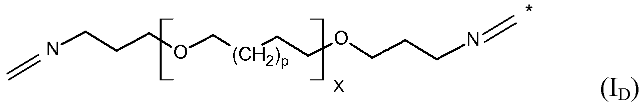 in which:
▪ x is an integer ranging from 10 to 20;
▪ p = 0 or 1; and
▪ * is the point of attachment of D to G via an imine bond;
- **G** represents a subunit of formula (I_{G}) below: 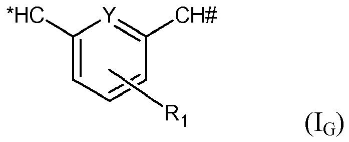 in which:
▪ R₁ represents a hydrogen atom or an alkyl radical containing from 1 to 4 carbon atoms,
▪ Y represents a nitrogen atom or C-OH,
▪ # is the point of attachment of G to D via an imine bond;
c) the dissolution of the polymer thus obtained in an organic solvent medium to obtain a solution of polymer (Solution P),
d) the dissolution of a transition metal salt of formula (II) below:
Mₘ(A)ₙ (II)
in which:
▪ M is a transition metal ion,
▪ A is a monovalent or divalent anion, and
▪ m and n are chosen such that the electrical neutrality of the salt is respected,
in an appropriate solvent to obtain a solution of said salt of formula (II) (solution S),
e) the addition, to said solution P, of solution S, in an amount such that at least 50% by number of the subunits of formula (I_{G}) present in the polymer are complexed to a transition metal ion,
f) the forming of the membrane and the evaporation of the solvent(s) from the reaction medium.

9. The process as claimed in claim 8, **characterized in that** M is a transition metal ion chosen from Zn²⁺, Fe²⁺, Cu⁺, Ni²⁺, Co²⁺ and Ag⁺.

10. The process as claimed in claim 8 or 9, **characterized in that** solution S is added to solution P in an amount such that 50% to 200% by number of the subunits of formula (I_{G}) present in the polymer are complexed with a transition metal ion.

11. The process as claimed in any one of claims 8 to 10, **characterized in that** the anions A of the salt of formula (II) are chosen from acetate, trifluoromethanesulfonate, tetrafluoroborate, hexafluorophosphate, nitrate and perchlorate anions.

12. The process as claimed in any one of claims 8 to 11, **characterized in that** the salt of formula (II) represents from 0.5 to 2 equivalents relative to the total mass of a repeating unit of formula (I').

13. The process as claimed in any one of claims 8 to 12, **characterized in that** the solvent medium is formed by an organic solvent chosen from tetrahydrofuran, trichloromethane and dichloromethane, and mixtures thereof.

14. The process as claimed in any one of claims 8 to 13, **characterized in that** the solvents of the solution S are chosen from lower alcohols and acetonitrile.

15. The use of a self-supporting polymer membrane as defined in any one of claims 1 to 7, in processes for the membrane separation of chemical species.

16. The use as claimed in claim 15, in pervaporation, reverse osmosis, nanofiltration and gas separation processes.

17. The use of a self-supporting polymer membrane as defined in any one of claims 1 to 7 and in which the metal ions are Zn²⁺ ions, for the selective separation of carbon dioxide.

18. A process for separating a chemical species, **characterized in that** it consists in passing a gaseous or liquid mixture containing the species that it is desired to separate out through a self-supporting polymer membrane as defined in any one of claims 1 to 7.

19. The use of a self-supporting polymer membrane as defined in any one of claims 1 to 7, for the separation of hydrocarbons, the recovery of volatile organic compounds, or the facilitated transportation of Na⁺/K⁺ ions.
